# EUROPEAN PATENT SPECIFICATION

(11) **EP 3 279 542 B1**
(45) Date of publication and mention of the grant of the patent: **30.10.2019**
(21) Application number: 16772783.3
(22) Date of filing: 29.03.2016
(51) Int. Cl.: F16L 55/163, B32B 1/08, E03B 7/00, E03F 7/00, E21B 29/10, F16L 55/165

(54) **METHOD FOR INSTALLING COVER MEMBER ONTO INNER WALL OF CIRCULAR TUBE OR VERTICAL SHAFT**
VERFAHREN ZUR INSTALLATION EINES ABDECKUNGSELEMENTS AUF DER INNENWAND EINES KREISFÖRMIGEN ROHRS ODER VERTIKALEN SCHACHTES
PROCÉDÉ PERMETTANT D'INSTALLER UN ÉLÉMENT DE REVÊTEMENT SUR UNE PAROI INTERNE DE TUBE CIRCULAIRE OU DE PUITS VERTICAL

(30) Priority: 31.03.2015 JP 2015072410
(43) Date of publication of application: 07.02.2018
(73) Proprietor: Kanto Natural Gas Development Co., Ltd.,, Mobara-shi, Chiba 297-8550 (JP)
(72) Inventor: IGI, Toshikazu, Mobara-shi Chiba 297-8550 (JP); MATSUMORI, Kenji, Ichikawa-shi Chiba 272-0004 (JP)
(74) Representative: Hynell Intellectual Property AB
(86) International application number: PCT/JP2016/060020
(87) International publication number: WO 2016/158902

(56) References cited:
- EP-A1- 0 499 153
- JP-A- H0 516 235
- JP-A- H07 507 125
- JP-A- H08 509 532
- JP-A- H09 123 278
- JP-A- S62 160 223
- JP-A- 2008 254 367
- JP-A- 2011 143 608
- JP-A- 2012 215 192
- US-A- 4 768 562
- US-A- 5 664 628
- US-A- 5 833 001
- US-A1- 2009 151 929

## Description

### Technical Field

The present invention relates to a method of attaching a cover member to the inner wall of a circular pipe and a vertical shaft, and particularly to a method of attaching a cover member to a circular pipe having a cylindrical inner wall, such as an open hole, a water pipe, a sewage pipe, a sea water pipe, a hot water pipe, a gas pipe, and a rock cavity.

### Background Art

Methods have been known for repairing a circular pipe, such as an open hole, a water pipe, a sewage pipe, a sea water pipe, a hot water pipe, and a gas pipe. According to Patent Literature 1, a polyurethane film is wound around a packer that is radially expandable, and a cover member that is impregnated with resin is wound around the polyurethane film. The packer is then lowered in a circular pipe, and is radially expanded. The cover member is pressed against the inner wall of the circular pipe and is held in that state until the resin is cured. Thereafter, the packer is pulled out to complete the repairing work of the circular pipe.

According to Patent Literature 2, a cover member having a slit that extends in the longitudinal direction from one end to the other end is wound around a packer. The cover member is radially contracted in advance to an outer diameter that is smaller than the inner diameter of the circular pipe. Specifically, the cover member is wound around a packer that is radially expandable. The cover member is radially contracted such that both circumferential ends of the slit overlap. An adhesive is applied on the outer surface of the cover member. The packer is then lowered in the circular pipe and is radially expanded. The cover member is pressed against the inner wall of the circular pipe due to the elastic restoring force of the cover member. According to this method, since the cover member is held in the cylinder by its own elastic restoring force, the packer can be pulled out soon.
Patent Literature 1: JP2001-20653A
Patent Literature 2: JP2010-77767A

### Summary of Invention

In the method described in Patent Literature 1, the packer cannot be pulled out until the resin is cured It is impossible even to contract the packer before the resin that was attached to the polyethylene film is cured and, not to mention, before the resin that was attached to the inner wall of the cylinder is cured. According to Patent Literature 1, the packer needs to be held in the circular pipe for about 24 hours, and it is difficult to reduce working time. In the method described in Patent Literature 2, since the cover member is a single member, it is difficult to easily contract the cover member in the radial direction, to ensure the elastic restoring force, and to ensure performance and strength as a cover member at one time. In other words, there is only a limited degree of freedom in design. Moreover, it is difficult to apply the methods described in Patent Literatures 1, 2 to a circular pipe that extends in a direction other than the vertical direction.

The present invention aims at providing a method of attaching a cover member to an inner wall of a circular pipe that can be completed in a short time, that provides a high degree of freedom in the design of the cover member and that does not limit the direction in which the circular pipe extends.

The present invention relates to a method of attaching a cover member including a first sheet and a sheet laminate to an inner wall of a circular pipe.

The attachment method comprises:
winding and temporarily fixing a first sheet around a cylindrical packer, wherein the first sheet has a radius of curvature or a flat shape, said radius of curvature being larger than an inner diameter of the circular pipe, wherein the first sheet further has elastic restoring force that restores the radius of curvature or the flat shape, and wherein the cylindrical packer has a radius that is smaller than the inner diameter of the circular pipe and is radially expandable;
forming a sheet laminate by adhering a plurality of sheets together with uncured first resin;
winding the sheet laminate around the first sheet, which is wound around the packer, via uncured second resin in order to form a cover member and to temporarily fix the sheet laminate;
applying uncured third resin on the cover member that is wound around the packer, and inserting the packer into the circular pipe;
pulling the packer by means of a first wire or a second wire and positioning the packer at a predetermined position of the circular pipe, wherein the first and second wires are attached to both axial ends of the packer, respectively;
radially expanding the packer at the predetermined position of the circular pipe in order to release temporary fixation of the first sheet and the sheet laminate, and pressing the cover member against the inner wall of the circular pipe via the third resin;
pulling the packer out of the circular pipe by pulling the first or second wire; and
curing the first, second and third resins in order to fix the cover member to the inner wall of the circular pipe.

When the packer is radially expanded and the temporary fixation is released, the cover member is pressed against the inner wall of the circular pipe due to the elastic restoring force of the first sheet. Thereafter, the cover member is fixed to the inner wall of the circular pipe by the third resin. The packer does not need to be held in the circular pipe until the first to third resins are cured, and can be immediately pulled out of the circular pipe. Thus, working time can be reduced. Since the cover member is formed of the first sheet and the sheet laminate, the type and thickness of the first sheet, the types, number and thicknesses of the sheets of the sheet laminate, the types of the first to third resins, the amount of the first to third resins with which the sheets are impregnated and the thicknesses in which the first to third resins are applied and so on can be finely adjusted according to individual conditions. Thus, a high degree of freedom can be ensured in the design of the cover member. Regardless of the direction in which the circular pipe extends, the packer can be located at a predetermined position of the circular pipe by pulling the packer by means of the first or second wire. Thus, according to the present invention, a method of attaching a cover member to an inner wall of a circular pipe can be provided that can be completed in a short time, that provides a high degree of freedom in the design of the cover member and that does not limit the direction in which the circular pipe extends.

### Brief Description of Drawings

Figure 1 is a flowchart illustrating a method of attaching a cover member according to an embodiment of the present invention;
Figure 2 is a cross-sectional view of a center rod;
Figure 3 is a perspective view illustrating a first sheet that is wound around the center rod;
Figure 4 is a plan view of the first sheet;
Figure 5 is a schematic diagram illustrating the configuration of a sheet laminate;
Figure 6 is a side view illustrating the first sheet wound around a packer;
Figure 7 is a side view illustrating the sheet laminate wound around the packer;
Figure 8 is a side view of a guide roller;
Figure 9A is a conceptual diagram illustrating a method of attaching the cover member to a circular pipe;
Figure 9B is a conceptual diagram illustrating the method of attaching the cover member to the circular pipe;
Figure 9C is a conceptual diagram illustrating the method of attaching the cover member to the circular pipe;
Figure 9D is a conceptual diagram illustrating the method of attaching the cover member to the circular pipe;
Figure 9E is a conceptual diagram illustrating the method of attaching the cover member to the circular pipe;
Figure 10A is a conceptual diagram illustrating the method of attaching the cover member to the circular pipe;
Figure 10B is a conceptual diagram illustrating the method of attaching the cover member to the circular pipe;
Figure 10C is a conceptual diagram illustrating the method of attaching the cover member to the circular pipe;
Figure 10D is a conceptual diagram illustrating the method of attaching the cover member to the circular pipe;
Figure 10E is a conceptual diagram illustrating the method of attaching the cover member to the circular pipe;
Figure 11A is a side view illustrating a packer in a circular pipe before and after it is radially expanded;
Figure 11B is a side view illustrating a packer in a circular pipe before and after it is radially expanded;
Figure 12 is a plan view of a first sheet of a cover member that is installed for the second time or later;
Figure 13A is a side view illustrating a second packer in a circular pipe before and after it is radially expanded;
Figure 13B is a side view illustrating the second packer in a circular pipe before and after it is radially expanded;
Figure 14A is a conceptual diagram illustrating another method of attaching a cover member to a circular pipe;
Figure 14B is a conceptual diagram illustrating another method of attaching a cover member to a circular pipe;
Figure 14C is a conceptual diagram illustrating another method of attaching a cover member to a circular pipe;
Figure 14D is a conceptual diagram illustrating another method of attaching a cover member to a circular pipe;
Figure 15A is a conceptual diagram illustrating another method of attaching a cover member to a circular pipe; and
Figure 15B is a conceptual diagram illustrating another method of attaching a cover member to a circular pipe.

### Description of Embodiments

Hereinafter, an embodiment of the present invention will be described with reference to the drawings. The present invention can be applied to various kinds of circular pipes having circular sections, as listed below:
- Water pipe (a water supply pipe, an industrial water supply pipe, an agricultural water supply pipe, an irrigation water pipe, a water guide pipe from an intake tower to a purification plant, a water supply pipe of a structure (e.g., building, condominium), a fire protection water pipe, a snow melting water pipe)
- Sewage pipe (a sewage pipe of a public sewage system etc., a drain pipe of a structure (e.g., building, condominium), a pipe to transfer excreta from a livestock housing to a treatment plant, a drain pipe from a farmland, a sewage pipe of a factory)
- Sea water pipe (a pipe to transfer or discharge salt water that is generated by the mining of water-soluble natural gas, an intake pipe and a discharge pipe of cooling sea water in a thermal or nuclear power plant, a pipe to transfer sea water to an aquacultural site of fish or the like, a pipe to transfer cooling water or waste cooling water in a factory, such as a steel plant)
- Hot water pipe (a pipe to transfer hot spring water from a source to an inn etc., a pipe to transfer hot spring water from a bath room of an inn etc. to a river etc., a pipe to return thermal discharge in a geothermal power plant to underground)
- Gas pipe (town gas pipe, nitrogen gas pipe, compressed air pipe, vapor pipe)
- Shaft installed in bedrock
- Open hole

The present invention can be preferably applied to a circular pipe that is connected to two or more shafts that are open on the ground and that extend in the horizontal or oblique direction. The present invention can also be carried out in a situation where water, hot water, sea water, sewage, gas, or the like flow through a pipe.

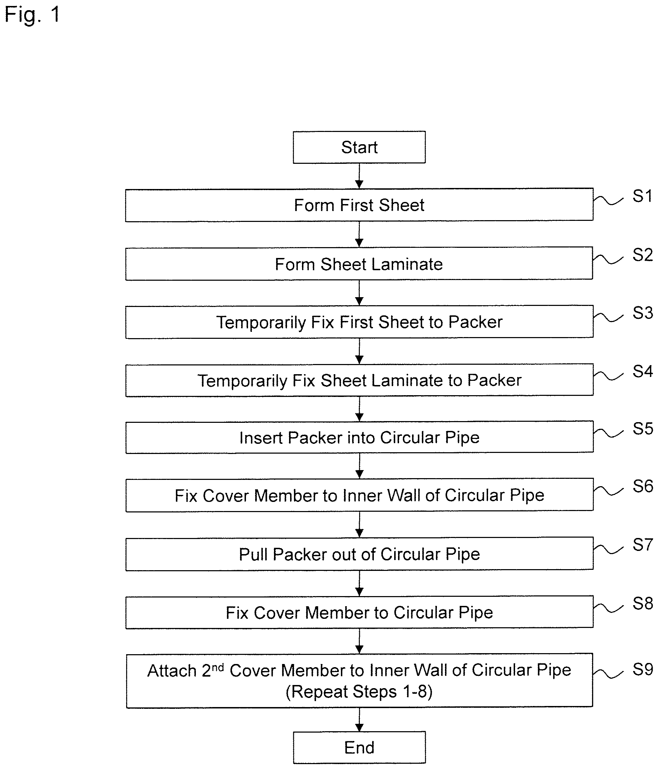

Figure 1 illustrates a flowchart of an embodiment of the present invention. Hereinafter, a method of attaching a cover member to the inner wall of a circular pipe will be described according to the steps illustrated in Figure 1. The embodiment described below is an example in which a cover member is fixed to a circular pipe having an inner diameter of 254.2 mm (10 inch).

### (Step S1: Forming the first sheet)

In the present invention, a cover member that consists of a first sheet and a sheet laminate is fixed to the inner wall of a circular pipe. The first sheet and the sheet laminate are formed separately, and then are integrated on a packer. The first sheet is formed first in the embodiment, but the sheet laminate may be formed first.

First, first sheet 5 is cut out by cutting a glass cloth into a shape that is larger than the finished shape. A glass cloth is a cloth that is created by processing glass fibers into a felt, and a cloth (manufactured by Nitto Boseki Co., Ltd.) that conforms to JIS WF230-100BS6 (0.25mm thick) is used in the embodiment. Then, first sheet 5 is impregnated with thermosetting resin 21 for the purpose of shape memory. Resin 21 is preferably an epoxy resin. Bisphenol-A epoxy resin is used as the base compound and denatured polyamine or denatured aromatic polyamine is used as the curing agent in the embodiment.

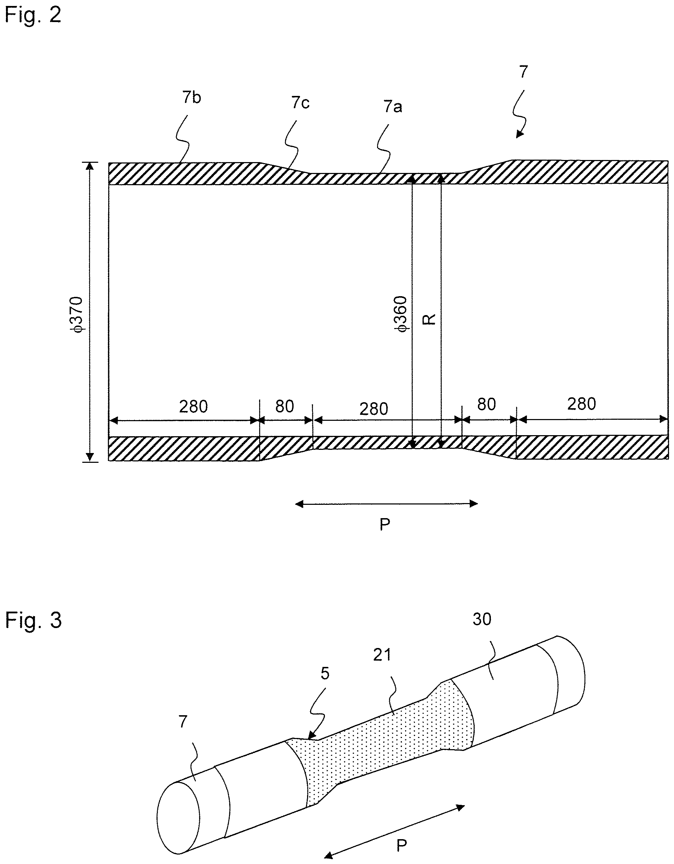

Next, first sheet 5 is wound around dedicated center rod 7. Figure 2 illustrates a cross-sectional view of the center rod. Center rod 7 includes small outer diameter portion 7a, large outer diameter portion 7b and portion 7c that connects small outer diameter portion 7a to large diameter portion 7b and that has an outer diameter that gradually increases. Small outer diameter portion 7a has outer diameter R that is larger than the inner diameter of the circular pipe. In the embodiment, the outer surface of a hard vinyl chloride pipe having an outer diameter of 370 mm is scraped to an outer diameter of 360 mm along a length of 280 mm, and portions 7c whose outer diameter gradually increases from 360 mm to 370 mm are provided on both sides of the scraped part along a length of 80 mm. Release tape or release film 30 made of polyethylene or the like is stuck on the outer surface of center rod 7 that was formed in this manner, and first sheet 5 that is impregnated with resin 21 is wound on the release tape or release film 30, as illustrated in Figure 3. By adhering release tape or release film 30 to center rod 7 before winding first sheet 5, that is, by inserting release tape or release film 30 between center rod 7 and first sheet 5, first sheet 5 can be easily removed from center rod 7 after resin 21 is cured. It is also possible to make center rod 7 itself, for example, from an easily releasable polyethylene pipe.

First sheet 5 is wound around center rod 7 due to the adhesive force of resin 21. Resin 21 is cured while first sheet 5 is wound around center rod 7 by holding the state for a certain time. Specifically, the curved shape of the radius of curvature R is memorized in first sheet 5 by curing resin 21 while holding first sheet 5 at the radius of curvature R that is larger than the inner diameter of the circular pipe. The first sheet has an elastic restoring force that will restore the radius of curvature R when the first sheet is deformed to a radius of curvature that is different from the radius of curvature R. In the embodiment, first sheet 5 memorizes a curved shape of the radius of curvature R = 180 mm, except for both ends thereof. Thereafter, first sheet 5 is removed from center rod 7 and is cut into a predetermined shape described below. First sheet 5 is preferably wound around center rod 7 again so that the curved shape is maintained.

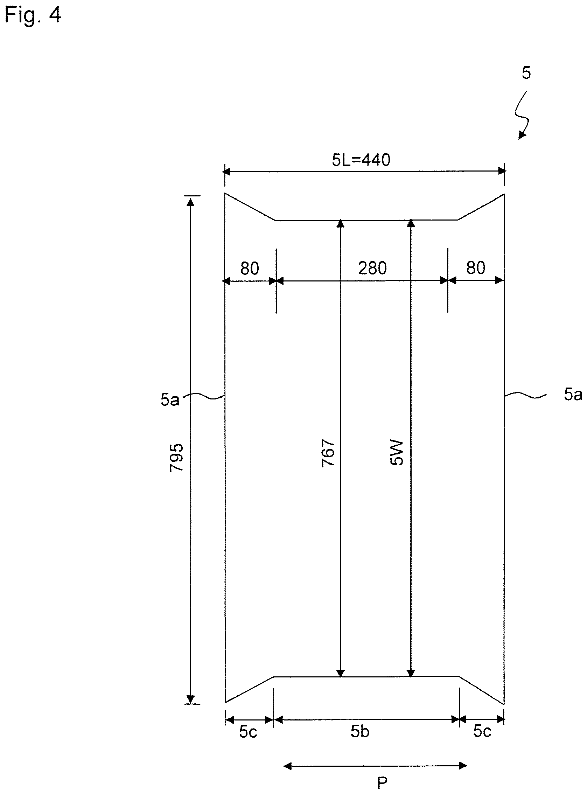

Some terms will be explained in order to describe the shape of first sheet 5 after it is cut out. Referring to Figure 4, "axial ends 5a" of first sheet 5 refer to two ends or two edges thereof in axial direction P of the circular pipe. "Axial length 5L" of the circular pipe refers to the length of first sheet 5 measured in axial direction P of the circular pipe. "Width 5W" of the circular pipe refers to the lateral width of first sheet 5 measured in a direction that is perpendicular to axial direction P of the circular pipe and has different values depending on the axial position on the circular pipe, as will be described below.

Width 5W of two axial ends 5a of first sheet 5 is set slightly shorter than the inner circumferential length of the circular pipe in order to prevent first sheet 5 from contacting the inner wall of the circular pipe. If first sheet 5 contacts the inner wall of the circular pipe, then an end of first sheet 5 may be caught between sheet laminate 6 and the inner wall of the circular pipe and may prevent sheet laminate 6 from adhering to the inner wall of the circular pipe. First sheet 5 has constant width portion 5b having constant width 5W that is smaller than the width of axial ends 5a and two portions 5c having gradually increasing widths that sandwich constant width portion 5b in axial direction P and in which widths 5W gradually increase toward respective axial ends 5a of first sheet 5. This shape is quite essential to form the tapered part of cover member 4 that will be described later. The width of constant width portion 5b is set slightly smaller than the inner diameter of cover member 4 after cover member 4 is attached to the circular pipe. Thus, first sheet 5 is prevented from overlapping in the circumferential direction when cover member 4 is attached to the inner wall of the circular pipe. Figure 4 illustrates the shape and dimensions of first sheet 5 in the embodiment.

In the embodiment, the glass cloth is cut into a predetermined shape after the shape is memorized in the glass cloth in advance. However, the glass cloth may be cut into a predetermined shape in advance, next be impregnated with resin 21 for shape memory, and then be wound around center rod 7.

The first sheet may have a flat shape. The first sheet may be formed of a metal, ceramic, plastic, composite material or the like, as long as it has elastic restoring force that restores the original radius of curvature. An example of the composite material is an FRP material in which a matrix, which is thermosetting resin, is combined with fibers. Examples of thermosetting resin include vinyl ester resin, unsaturated polyester resin, epoxy resin, polyurethane resin, polyurea resin, phenol resin, furan resin, and methyl methacrylate resin (MMA resin). Examples of fiber include glass fiber, carbon fiber and aramid fiber. The first sheet may be formed of a resin material or a metal material by means of molding or machining.

### (Step 2: Forming a sheet laminate)

Sheet laminate 6 is formed by adhering a plurality of sheets together with first resin 22. Sheet laminate 6 consists of glass cloths, chopped strand mats and roving cloths. A chopped strand mat is formed by chopping strands in a predetermined length, then by distributing and layering them in random directions in a uniform thickness into a mat shape. A chopped strand mat can increase the strength of sheet laminate 6 in all directions. A roving cloth is formed by gathering several hundreds of filaments each having a diameter of 10-15 µm into a strand, and then paralleling the strands uniformly into a bundle having a predetermined yarn number. A roving cloth can increase the strength of sheet laminate 6 in axial direction P of the circular pipe.

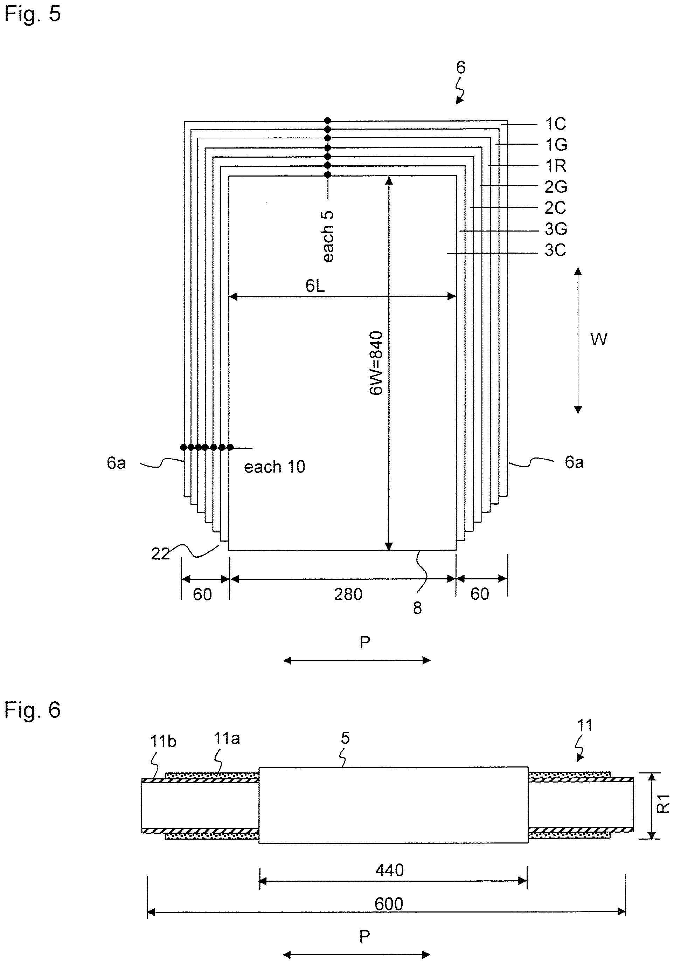

Figure 5 illustrates a configuration of sheet laminate 6. Sheet laminate 6 is formed by adhering seven sheets, that is, first glass cloth 1C, first chopped strand mat 1G, first roving cloth 1R, second chopped strand mat 2G, second glass cloth 2C, third chopped strand mat 3G and third glass cloth 3C in this order. In the embodiment, a cloth (manufactured by Nitto Boseki Co., Ltd.) that conforms to JIS WF230-100BS6 having a thickness of 0.25 mm is used as the glass cloth, a mat (manufactured by Nitto Boseki Co., Ltd.) that conforms to JIS MC-380A-104SS having a thickness of 0.5 mm is used as the chopped strand mat, and a cloth (manufactured by Nitto Boseki Co., Ltd.) that conforms to JIS WR-570C-100CS having a thickness of 0.5 mm is used as the roving cloth.

"Axial end 6a," "axial length 6L," and "width 6W" of each sheet of sheet laminate 6 are defined in the same manner as those of first sheet 5. However, unlike first sheet 5, each sheet of sheet laminate 6 has a rectangular shape. As will be described later, when wound around first sheet 5, first glass cloth 1C is at the outermost position, and third glass cloth 3C is at the innermost position. When wound around first sheet 5, axial length 6L of each sheet of sheet laminate 6 is longer than any sheet that is positioned on the inner side of the sheet. In the embodiment, axial length 6L of first glass cloth 1C is 400 mm. Axial lengths 6L are gradually reduced by 20 mm, and axial length 6L of third glass cloth 3C is 280 mm. On the other hand, width 6W of each sheet is constant, and is 840 mm in the embodiment.

In order to create sheet laminate 6, a polyvinyl chloride sheet is placed on a work table first, and a polyethylene sheet is stuck on the polyvinyl chloride sheet. Thermosetting first resin 22 is applied on the polyethylene sheet, then first glass cloth 1C is placed thereon and is impregnated with first resin 22. Similarly, sheets from first chopped strand mat 1G to third glass cloth 3C are placed on top of each other while impregnating them with first resin 22. At this time, by aligning the centers of the sheets with regard to axial direction P of the circular pipe, two axial ends 6a of each sheet are shifted inward in the same distance from two axial ends 6a of a sheet that is placed underneath the sheet. In the embodiment, axial ends 6a of each sheet are positioned 10 mm inside relative to axial ends 6a of the sheet that is placed underneath the sheet. Meanwhile, the position of each sheet with regard to the width direction W is gradually shifted in the same direction from the sheet that is placed underneath the sheet. In the embodiment, each sheet is shifted 5 mm in the width direction W, and as a result, the sheets are stuck to each another in the positional relationship illustrated in Figure 5. First resin 22 is preferably an epoxy resin, and the same base compound and the same curing agent as in resin 21 for shape memory may be used. The ratio of the base compound to the curing agent may be different from that in resin 21.

Sheet laminate 6 may be formed in a factory or the like in advance. It is preferable that sheet laminate 6 that is impregnated with uncured first resin 22 be stored in a refrigerator or a freezer in order to prevent first resin 22 from being cured. The progress of curing can be stopped or delayed by storing sheet laminate 6 at a temperature lower than the ambient temperature.

### (Step 3: Temporary fixation of the first sheet to the packer)

First sheet 5 whose curved shaped is memorized is wound around cylindrical packer 11. As illustrated in Figure 6, packer 11 includes expandable rubber element 11a that is radially expandable and support portion 11b around which expandable rubber element 11a is wound. Support portion 11b is a hollow cylinder. Expandable rubber element 11a terminates at positions that are slightly at the inner side of both ends of support portion 11b in the axial direction. Expandable rubber element 11a can be radially expanded by feeding pressurizing gas, such as nitrogen gas. In the embodiment, a packer manufactured by Geopro S.A. (Belgium) is used. Packer 11 or expandable rubber element 11a has radius R1 that is smaller than the shape-memorized radius R of first sheet 5, and radius R1 is 85 mm (170 mm in diameter) in the embodiment.

Next, first sheet 5 is wound around and temporarily fixed to the outer surface of expandable rubber element 11a of packer 11. Specifically, first, a plastic film having appropriate stretchability is wound around expandable rubber element 11a. Then, first sheet 5 is wound around the plastic film as tightly as possible, and is temporarily fixed by paper tapes. At this time, first sheet 5 is wound around packer 11 such that the concave surface of first sheet 5 faces the outer surface of packer 11, that is, with the same bending direction as the shape-memorized bending direction of first sheet 5. The type of the paper tape used in the temporary fixation and the way of winding the paper tape are selected such that the paper tape breaks when expandable rubber element 11a is expanded.

### (Step 4: Temporary fixation of the sheet laminate to the packer)

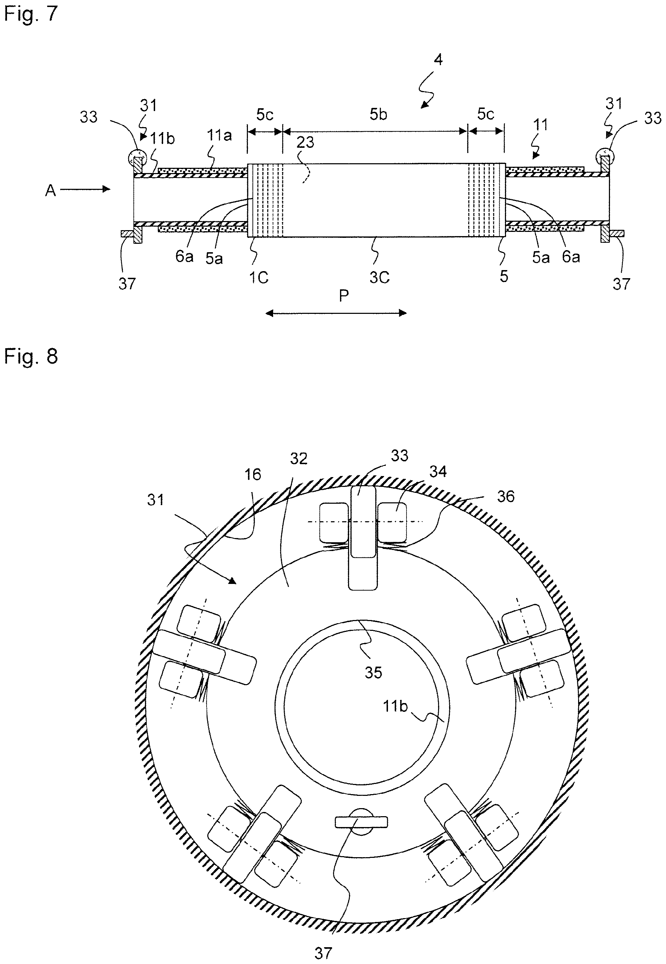

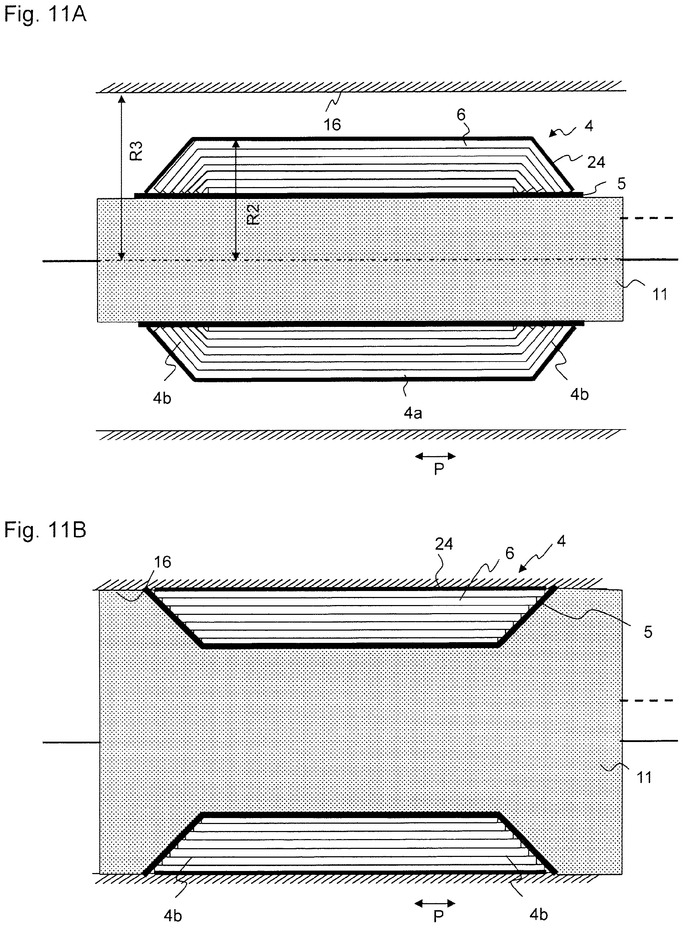

Sheet laminate 6 is wound around the outer surface of first sheet 5, which is wound around packer 11, via second resin 23, and is temporarily fixed. Thus, cover member 4 that consists of first sheet 5 and sheet laminate 6 is formed on packer 11. Specifically, second resin 23 is applied on the outer surface of temporarily fixed first sheet 5 and the outer surfaces of the paper tapes that are used for temporary fixation. Second resin 23 may be of the same composition as resin 21 for shape memory. Then, as illustrated in Figure 7, sheet laminate 6 is wound around the outer surface of first sheet 5 in a positional relationship in which third glass cloth 3C comes into contact with first sheet 5. Figure 7 shows that first glass cloth 1C is located at the front, and third glass cloth 3C is located at the back. Sheet laminate 6 is preferably wound from side 8 (see Figure 5), from which third glass cloth 3C projects. Two axial ends 6a of each sheet of sheet laminate 6 are closer to corresponding axial ends 5a of first sheet 5 than any one of the sheets that are positioned on the inner side of said sheet. Also, two axial ends 6a of each sheet are positioned at corresponding portions 5c of first sheet 5 whose widths gradually increase. Thus, cover member 4 includes constant thickness portion 4a and tapered portions 4b that are positioned on both axial end portions thereof and whose radial thicknesses decrease toward the respective axial ends 5a of first sheet 5 (see Figure 11).

Sheet laminate 6 is positioned such that the axial center of sheet laminate 6 coincides with the axial center of first sheet 5. Accordingly, two axial ends 6a of the uppermost first glass cloth 1C are positioned on the inner side of respective axial ends 5a of first sheet 5 by the same distance from respective axial ends 5a of first sheet 5. In the embodiment, the distance is 20 mm. Sheet laminate 6 is temporarily fixed by means of paper tapes after it is wound. The type of the paper tapes used in the temporary fixation and the way of winding the paper tapes are selected such that the paper tapes are broken when expandable rubber element 11a is radially expanded.

### (Step 5: Insertion of the packer into the circular pipe)

Next, as illustrated in Figure 7, guide rollers 31 are attached to support portion 11b of packer 11. Guide rollers 31 are attached to the parts of the outer side surface of support portion 11b on both axial ends where expandable rubber element 11a is not attached. Guide rollers 31 guide packer 11 in the circular pipe. Figure 8 illustrates a side view of guide roller 31, as viewed from direction A in Figure 7. Guide roller 31 has main body 32, five wheels 33, and five bearings 34. Bearings 34 are attached to main body 32 and rotatably support wheels 33. Five wheels 33 are arranged at equal intervals in the circumferential direction on a virtual circle that is concentric with packer 11. A through hole 35 into which the axial end of packer 11 is inserted is provided at the center of main body 32. Since guide rollers 31 are fitted outside of packer 11, both ends of support portion 11b remain open in the axial direction after guide rollers 31 are attached Thus, before cover member 4 is attached, while cover member 4 is being attached (to be more precise, after packer 11 is inserted into circular pipe 16 and until cover member 4 is fixed to the inner wall of circular pipe) and after cover member 4 is attached, liquid or gaseous material that normally flows, such as water, sewage, sea water or water, can flow through the inner space of support portion 11b. Guide rollers 31 are fixed to packer 11 by means of bolts, not illustrated. Hooks 37 that hold first wire 19 or second wire 20 are formed on the outer side surface of main body 32.

Bearings 34 are radially outwardly biased by means of springs 36. Wheels 33 of guide roller 31 keep abutting against the inner wall of circular pipe 16, thereby packer 11 is kept concentric with circular pipe 16. The maximum diameter of guide roller 31 becomes smaller than the inner diameter of circular pipe 16 by compressing springs 36, thereby guide roller 31 can be inserted into circular pipe 16. Springs 36 may be omitted. In this case, the maximum diameter of guide roller 31 is smaller than the inner diameter of cover member 4 that is to be attached, and only two lower wheels 33 abut against the inner wall of circular pipe 16 before cover member 4 is attached. Although the center of packer 11 is shifted to the lower side of the center of circular pipe 16, the center of packer 11 substantially coincides with the center of circular pipe 16 when packer 11 is radially expanded. Thus, cover member 4 can be attached appropriately.

A bow type centralizer, which is used for maintenance work of a well and the like, may be used instead of guide rollers 31. A centralizer has, for example, a plurality of (e.g., four) bow-shaped beam members that are arranged equidistant from the longitudinal axis thereof. Each beam member elastically and radially outwardly deforms and abuts against the inner wall of a circular pipe. The elastic deformation of the beam members is balanced and the longitudinal axis of the centralizer coincides with the center axis of the circular pipe so that packer 11 can be kept concentric with circular pipe 16.

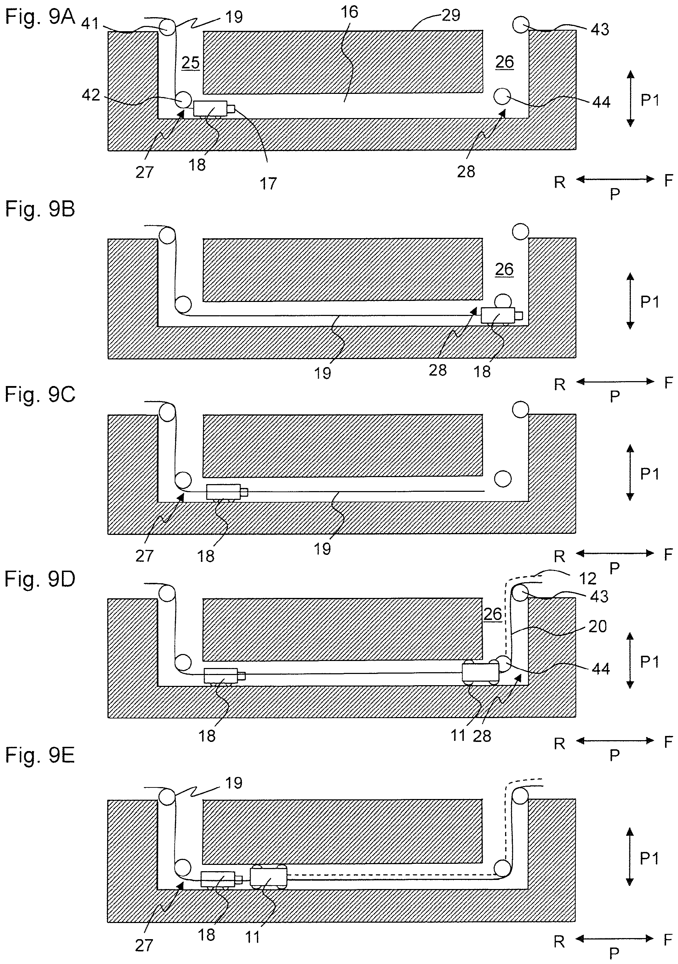

Figures 9A-10E are conceptual diagrams illustrating the method of attaching the cover member to the circular pipe. In the embodiment, circular pipe 16 extends substantially horizontally. First shaft 25 and second shaft 26 extend upward in vertical direction P1 from different positions of circular pipe 16 and are open on ground 29. First shaft 25 and second shaft 26 are manholes having an inner diameter (e.g., 900 mm - 1200 mm in diameter) that allows a worker to enter. The part of circular pipe 16 that is to be repaired is located between the connection with first shaft 25 (hereinafter referred to as first connecting portion 27) and the connection with second shaft 26 (hereinafter referred to as second connecting portion 28). In the following description, the side closer to second connecting portion 28 is referred to as front F or the front part, and the side closer to first connecting portion 27 is referred to as rear R or the rear part.

First, as illustrated in Figure 9A, camera device 18 on which imaging means 17, such as a still camera, a video camera or a television camera, is mounted, is lowered to first connecting portion 27 through first shaft 25. One end of first wire 19 is detachably held by camera device 18 in advance. Accordingly, camera device 18 also functions as a wire holder. First guide roller 41 is provided in the upper part (near ground 29) of first shaft 25, and second guide roller 42 is provided in first shaft 25 near first connecting portion 27. First wire 19 is wound around first guide roller 41 and second guide roller 42 by a worker. This allows first wire 19 to pass through predetermined reference points and to smoothly change direction from first shaft 25 to circular pipe 16. It is also possible to detect the axial position of packer 11 in the circular pipe by measuring the travel distance of first wire 19 at the predetermined reference points. Camera device 18 is installed in circular pipe 16 by a worker such that imaging means 17 is positioned at front F and first wire 19 is held at rear R. Camera device 18 may be driven by power supplied from a power cable that is connected to the rear part, or may be self-powered through the use of a built-in battery. Imaging means 17 is connected to a monitor device (not shown) that is installed on ground 29 via a cable (not shown) that is attached to the rear part.

Next, as illustrated in Figure 9B, camera device 18 is driven forward in circular pipe 16 to the vicinity of second connecting portion 28. Images taken by camera device 18 while it moves can be checked by a worker through a monitor device on ground 29. The worker can know the condition of the inner wall of circular pipe 16 on the monitor device, particularly whether there is any leakage of water, crack or the like. When circular pipe 16 needs washing for examination or repairing, the inner wall of circular pipe 16 may be washed by driving camera device 18 back to first connecting portion 27 and then by inserting a washing hose into circular pipe 16. Camera device 18, including imaging means 17, is waterproof, so the inner wall of circular pipe 16 can be washed while checking the effect of washing by means of camera device 18.

First wire 19 is pulled along with camera device 18 so that the front end of first wire 19 is moved to the vicinity of second connecting portion 28. A worker climbs down to second connecting portion 28 through second shaft 26 and detaches first wire 19 that is held by camera device 18.

Next, thermosetting third resin 24 is applied to the outer surface of sheet laminate 6 of cover member 4. Third resin 24 may have the same composition as resin 21 for shape memory. If a crack or the like is found on the inner wall of circular pipe 16, any material having a composition with good water cutoff performance may be used as the third resin. When a specific resin is to be used as third resin 24 regardless of the condition of the inner wall of circular pipe 16, third resin 24 may be applied at an earlier stage.

Then, as illustrated in Figure 9C, camera device 18 is driven back to the vicinity of first connecting portion 27. Since first wire 19 is detached from camera device 18, the front end of first wire 19 is left in the vicinity of second connecting portion 28. First wire 19 extends on the bottom of circular pipe 16, that is, in a space between camera device 18 and circular pipe 16, due to gravity. Therefore, first wire 19 is not prevented from being dragged toward rear R when camera device 18 is driven backward.

Then, as illustrated in Figure 9D, packer 11 is lowered to second connecting portion 28 through second shaft 26. Second wire 20 and pressurizing hose 12 are attached to the front part of packer 11 in advance. Second wire 20 or pressurizing hose 12 may be used in order to lower packer 11. First wire 19 is attached to the rear part of packer 11 by a worker. Thus, first wire 19 and second wire 20 are attached to both sides of packer 11 in axial direction P, respectively. Packer 11 is connected to a pressurizing gas supply unit (not shown) on ground 29, through pressurizing hose 12. Packer 11 can be radially inflated by pressurizing gas (e.g., nitrogen gas) that is fed from the pressurizing gas supply unit and supplied to the inside of packer 11. Third guide roller 43 is provided in the upper part (near ground 29) of second shaft 26, and fourth guide roller 44 is provided in second shaft 26 in the vicinity of second connecting portion 28. Second wire 20 is wound around third guide roller 43 and fourth guide roller 44 by a worker. This allows second wire 20 to pass through predetermined reference points and to smoothly change direction from second shaft 28 to circular pipe 16.

Then, as illustrated in Figure 9E, first wire 19 is pulled from ground 29 and packer 11 is driven back to a predetermined position near first connecting portion 27 where cover member 4 is to be fixed to the inner wall of circular pipe 16. The position of packer 11 can be known by means of imaging means 17. The position of packer 11 can be fine-tuned by alternately pulling first wire 19 and second wire 20. The position of packer 11 may also be controlled by monitoring the length of first wire 19 that is inserted into first shaft 25 and circular pipe 16 or the length of second wire 20 that is inserted into second shaft 26 and circular pipe 16.

Figure 11A illustrates packer 11 in the aforementioned predetermined position before it is radially expanded. Illustration of guide rollers 31 is omitted in Figure 11A. Radius R3 of circular pipe 16 is smaller than shape-memorized the radius of curvature R of first sheet 5 and is larger than radius R2 of the outer surface of third resin 24. Resin 21 has already been cured, but first to third resins 22-24 have not yet been cured. Relative movement between sheet laminate 6 and first sheet 5 and between adjacent sheets of sheet laminate 6 are only restricted by the paper tapes. Since first sheet 5 and sheet laminate 6 are wound firmly around packer 11, tapered portions 4b on both ends of cover member 4 extend along packer 11, and the outer diameters of tapered portions 4b decrease toward the ends.

### (Step 6: Fixation of the cover member to the inner wall of circular pipe)

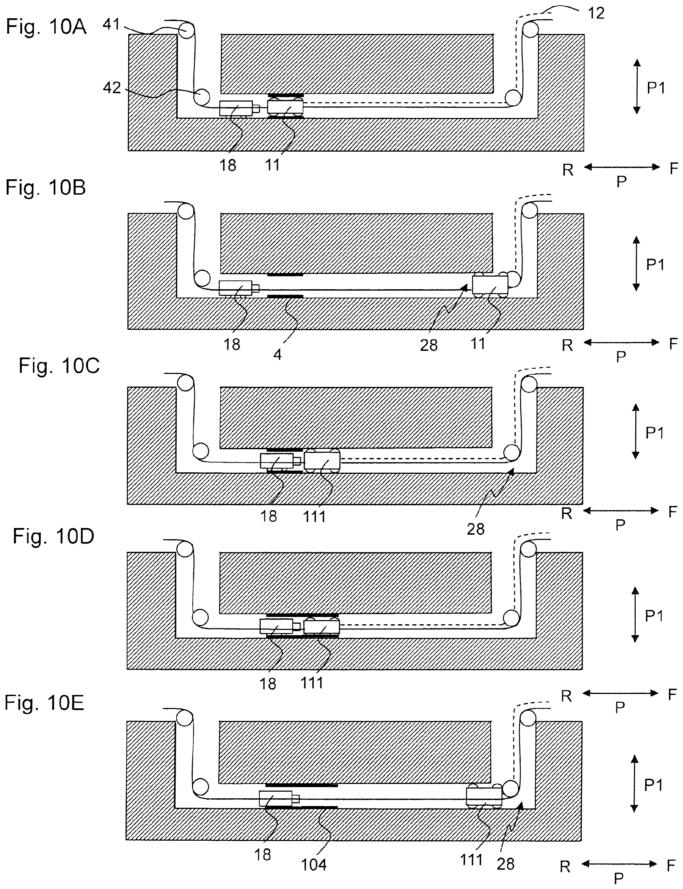

Next, as illustrated in Figure 10A, packer 11 is radially expanded in circular pipe 16. Specifically, pressurizing gas is fed into packer 11 from the pressurizing gas supply unit through pressurizing hose 12 in order to inflate packer 11. Figure 11B illustrates packer 11 in the aforementioned predetermined position after it is expanded. As the expansion of packer 11 goes on, first sheet 5 and sheets of sheet laminate 6 are also radially expanded, thereby the paper tapes that temporarily fix first sheet 5 and sheet laminate 6 are broken, then the temporary fixation of first sheet 5 and sheet laminate 6 is released. Since first sheet 5 and the sheets of sheet laminate 6 can be moved relative to each other in the circumferential direction, they can be radially expanded smoothly. Cover member 4 is pressed against the inner wall of circular pipe 16 via third resin 24. In the embodiment, Step 6 can be performed in about 30 seconds. Since tapered portions 4b of cover member 4 are pressed by packer 11, tapered portions 4b extend along the inner wall of circular pipe 16. Thus, the inner diameter of tapered portions 4b increases toward the end.

Since first sheet 5 is wound around packer 11 in radius R1 that is smaller than shape-memorized the radius of curvature R of first sheet 5, first sheet 5 is radially expanded due to the elastic restoring force when the temporary fixation is released. The elastic restoring force presses not only first sheet 5 itself, but also sheet laminate 6, against the inner wall of circular pipe 16. Even after sheet laminate 6 is pressed against the inner wall of circular pipe 16, first sheet 5 further continues to apply elastic restoring force to sheet laminate 6. Accordingly, sheet laminate 6 is held on the inner wall of circular pipe 16 by first sheet 5 even in the absence of the pressing force of packer 11. If necessary, packer 11 may be radially expanded again in order to press cover member 4 against the inner wall of circular pipe 16.

Both ends of each sheet of sheet laminate 6 overlap in the circumferential direction when the sheet is fixed to the inner wall of circular pipe 16. In the embodiment, the widths of all the sheets are 840 mm, which is larger than the circumferential length (□ × 254.2 mm = 798 mm) of circular pipe 16. Overlapping in the circumferential direction improves sealing performance. Since the sheets of sheet laminate 6 are shifted in the width direction and are stuck together, as described above, the overlapping positions are shifted in the circumferential direction. Thus, there is no large and local variation in the thickness of sheet laminate 6.

### (Step 7: Pulling the packer out of the circular pipe)

As illustrated in Figure 10B, packer 11 is radially contracted and is pulled to the vicinity of second connecting portion 28 by means of second wire 20. Since cover member 4 is pressed against the inner wall of circular pipe 16 by the elastic restoring force of first sheet 5, as described above, packer 11 can be pulled out upon completion of Step 6. Since resin 21 for shape memory with which first sheet 5 is impregnated has already been cured, packer 11 can be radially contracted smoothly without causing large friction or resistance between first sheet 5 and the plastic film that covers the surface of packer 11. Packer 11 can be pulled upward to ground 29 through second shaft 26 by means of second wire 20 or pressurizing hose 12.

### (Step 8: Fixation of the cover member to the circular pipe)

Second, third, and fourth resins 22-24 are cured and cover member 4 is fixed to the inner wall of circular pipe 16. Resin is cured within a predetermined time and cover member 4 is firmly fixed to the inner wall of circular pipe 16. This step does not require any particular operation and is completed just by waiting for the elapse of the predetermined time.

### (Step 9: Fixation of the second cover member to the inner wall of circular pipe)

The length of the cover member is limited by the length of the packer. In particular, since packer 11 is installed and removed through second shaft 26 in the embodiment, it is difficult to use a long packer. Therefore, when the circular pipe is long, a plurality of cover members need to be successively fixed to the inner wall of the circular pipe. The second and subsequent cover members can also be fixed to the inner wall of the circular pipe according to the aforementioned Steps 1-8. Of these steps, Step 1 (forming the first sheet) may be performed each time at a site, or a plurality of first sheets may be formed in a factory or the like in advance. Similarly, Step 2 (forming the sheet laminate) may be performed each time at a site, or a plurality of sheet laminates may be formed in a factory or the like in advance. When a plurality of packers is available, Steps 2-4 may be performed at a site in advance, and Step 5 and the subsequent steps may be performed soon after another packer is pulled out of second shaft 26. Here, an embodiment in which two cover members are successively fixed to the inner wall of circular pipe 16 will be described. In the following description, the cover member that is installed later is referred to as second cover member 104. Second cover member 104 is mounted to second packer 111.

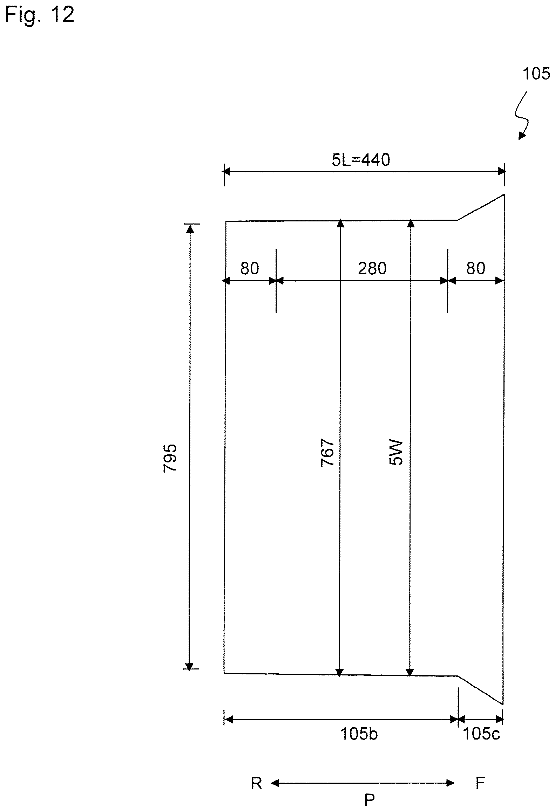

Second cover member 104 has the same configuration and shape as cover member 4 that is first fixed to circular pipe 16, except that the shape of first sheet is different. Specifically, in Step 1, first sheet 105 of second cover member 104 is formed into a shape that is different from the shape of first sheet 5 of cover member 4. As illustrated in Figure 12, first sheet 105 does not have a portion having a gradually increasing width at the end of rear R in axial direction P. First sheet 105 only has constant width portion 105b that extends to the end of rear R and portion 105c having a gradually increasing width that is adjacent to constant width portion 105b. The width of portion 105c gradually increases toward the end of front F.

In order to perform Step 9, a worker detaches first wire 19 from packer 11 at second connecting portion 28 when the packer is pulled to the vicinity of second connecting portion 28 (i.e., in the state illustrated in Figure 10B). Next, packer 11 is pulled upward through second shaft 26, and second packer 111 is lowered to second connecting portion 28 through second shaft 26. Second wire 20 and pressurizing hose 12 are attached to the front part of second packer 111 in advance. A worker attaches first wire 19, which is left in the vicinity of second connecting portion 28, to the rear part of second packer 111.

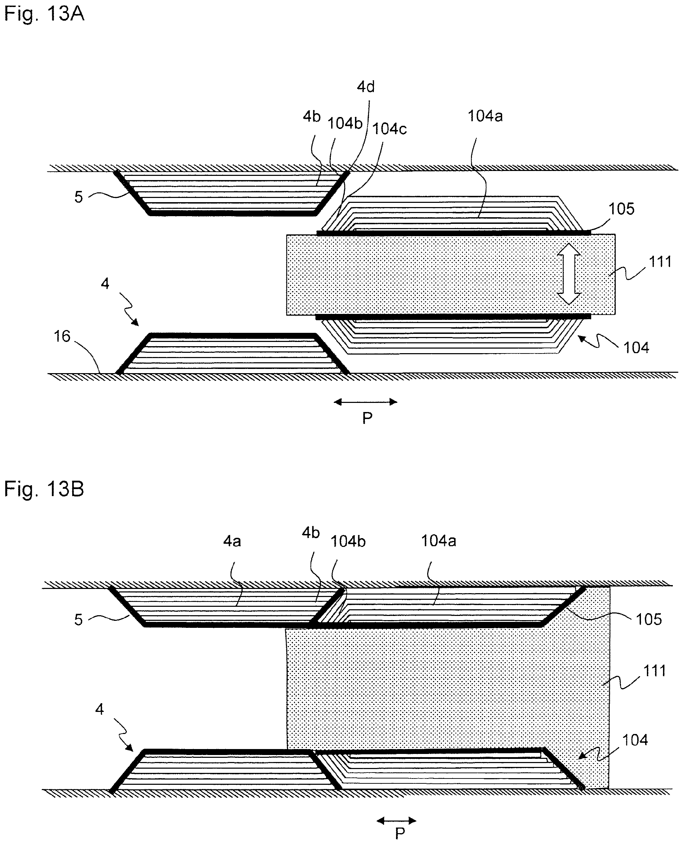

Thereafter, as illustrated in Figure 10C, second packer 111 is pulled to a predetermined position where second cover member 104 is to be installed by means of first wire 19. Figure 13A illustrates second packer 111 at the aforementioned predetermined position before it is radially expanded. The position of second packer 111 is adjusted such that tapered portion 4b, 104b of cover member 4 and second cover member 104, which are opposite to each other, are laid on top of each other. The position of second packer 111 is adjusted such that boundary 104c between tapered portion 104b and constant thickness portion 104a of second cover member 104 coincides with end 4d of tapered portion 4b of cover member 4. Tapered portion 104b of second cover member 104 may be laid on top of tapered portion 4b of cover member 4 partially in axial direction P of circular pipe 16, but it is preferred that tapered portion 104b be laid on top of tapered portion 4b of cover member 4 over the entire length of portion 4b in axial direction P and be laid only on top of tapered portion 4b of cover member 4.

Next, as illustrated in Figure 10D, second packer 111 is radially expanded, and second cover member 104 is attached to the inner wall of circular pipe 16. Figure 13B illustrates second packer 111 at the aforementioned predetermined position after it is radially expanded. Tapered portion 104b of second cover member 104 abuts against and presses the inner wall of tapered portion 4b of cover member 4. Tapered portion 104b of second cover member 104 is installed such that it overrides the inner surface of tapered portion 4b of cover member 4. As a result, a shape of an inner wall that is substantially as smooth as constant thickness portions 4a, 104a can be realized at the boundary between cover member 4 and second cover member 104. Furthermore, since first sheet 105 of second cover member 104 radially and outwardly presses tapered portion 4b of cover member 4 through second cover member 104 due to the aforementioned elastic restoring force, high sealing performance can also be achieved at the boundary between cover member 4 and second cover member 104.

Moreover, the end part of first sheet 105 at rear R is formed into a linear shape. Thus, no crease or swelling is generated in first sheet 105 when it is radially pressed by second packer 111. Specifically, first sheet 5 of cover member 4 has portion 5c having a gradually increasing width in which the diameter increases toward the end of rear R in accordance with the shape of tapered portion 4b. On the other hand, the overlapping part between cover member 4 and second cover member 104 has a substantially cylindrical inner surface. If first sheet 105 is formed in the same shape as first sheet 5, then an excessive circumferential length that is generated at the overlapping part between cover member 4 and second cover member 104 causes a crease or a swelling. Since first sheet 105 of second cover member 104 is deformed into a cylindrical shape in accordance with the shape of the overlapping part between cover member 4 and second cover member 104, a crease or a swelling is less likely to occur.

Lastly, as illustrated in Figure 10E, second packer 111 is pulled to second connecting portion 28 by means of second wire 20 and is pulled upward through second shaft 26. The above steps may be repeated when three or more cover members are attached.

The present invention may be modified in various ways other than the above embodiment.

A plurality of packers can be simultaneously inserted into a circular pipe so that a plurality of cover members can be consecutively attached to the circular pipe. Specifically, in Figure 9A, first wires of the same number as that of packers are attached to camera device 18 in advance and are moved to the vicinity of the second connecting portion. Next, in Figure 9D, a plurality of packers are installed into the circular pipe, and the first wires are attached to the respective packers. In the steps illustrated in Figures 10A-10E, cover members are successively attached to the circular pipe, starting from the packer on the rear side. Camera device 18 and the other packers are driven in the front and rear directions, as needed, so that the cover members are attached at predetermined positions by means of respective packers.

First to third resins 22-24 may be cured instantaneously or in a short time by using high-frequency electromagnetic waves. After a packer is radially expanded, high-frequency electromagnetic waves are applied to the first to third resins for a predetermined time. An oscillator to generate electromagnetic waves is built in the packer and is connected to a high-frequency electric power unit on the ground through a cable that is attached to the front part of the packer.

The present invention may be used to repair first shaft 25 and second shaft 26. Since first shaft 25 and second shaft 26 extend vertically from ground 29, a packer may be hung by means of a single wire instead of two wires.

A sensor, a strain gauge or the like may be embedded in the first sheet or the sheet laminate. For example, when the present invention is applied to an open hole or a vertical or horizontal shaft in bedrock, an FBG (fiber Bragg grating) sensor, a temperature sensor, a magnetic sensor, a displacement sensor, a load sensor, a humidity sensor, and an acceleration sensor may be provided in order to conduct a ground survey or an earthquake observation etc.

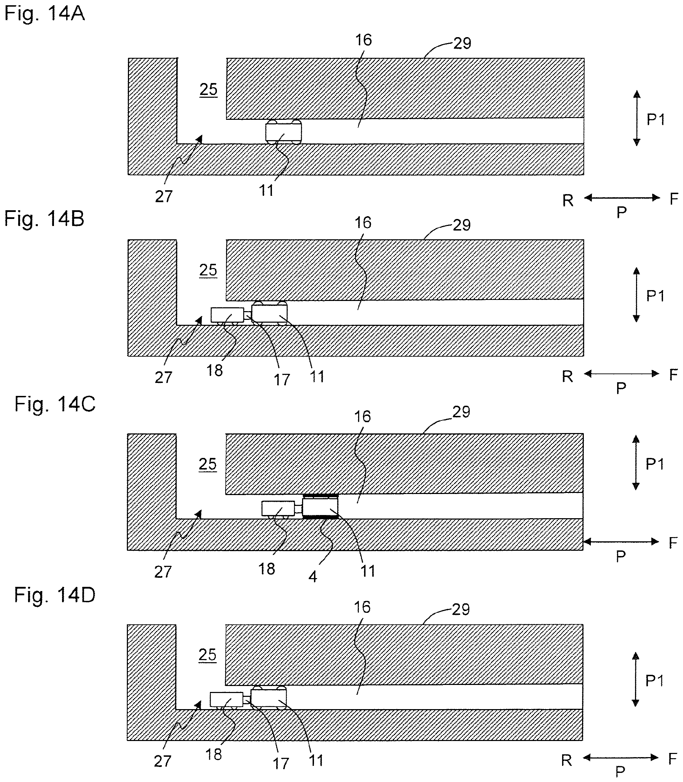

Furthermore, in the present invention, push-pull means that is attached to one side of a packer in the axial direction may be used instead of using two wires. Camera device 18 or pressurizing hose 12 may be used as the push-pull means. When camera device 18 is used as the push-pull means, packer 11 is first lowered through first shaft 25 from ground 29 and is arranged in cylindrical pipe 16, as illustrated in Figure 14A. Next, as illustrated in Figure 14B, camera device 18 is arranged in cylindrical pipe 16 and is attached (connected) to the rear part of packer 11. Then, as illustrated in Figure 14C, packer 11 is pushed to a predetermined position by means of camera device 18, and cover member 4 is attached to the inner wall of circular pipe 16. Then, as illustrated in Figure 14D, packer 11 is pulled to the vicinity of first connecting portion 27 by means of camera device 18, and then camera device 18 and packer 11 are pulled upward through first shaft 25. Camera device 18 may be left near first connecting portion 27. The push-pull means is not limited to camera device 18, and various devices that run in the cylinder may be used.

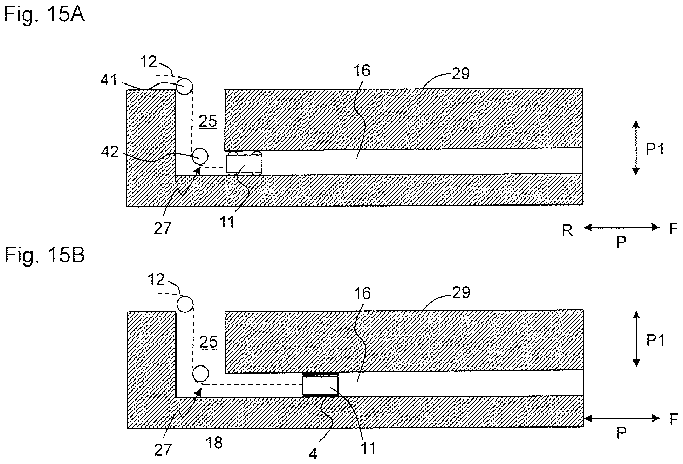

When a pressurizing hose is used as the push-pull means, packer 11 is first lowered through first shaft 25 from ground 29 and is arranged in cylindrical pipe 16, as illustrated in Figure 15A. Pressurizing hose 12 is attached to the rear part of packer 11 in advance. Next, as illustrated in Figure 15B, packer 11 is pushed to a predetermined position by means of pressurizing hose 12, and cover member 4 is attached to the inner wall of circular pipe 16. Thereafter, packer 11 is pulled to the vicinity of first connecting portion 27 by means of pressurizing hose 12 and is pulled upward through first shaft 25. When pressurizing hose 12 is also used, guide rollers 41, 42 that are similar to those used for the first wire may be used in order to determine the route of pressurizing hose 12.

By using the push-pull means in order to position the packer, only first shaft 25 may be used to attach cover member 4 to the circular pipe when there is no second shaft 26 or when second shaft 26 is far away from first shaft 25.

### List of Reference Numerals

- 1C: first glass cloth
- 1G: first chopped strand mat
- 1R: first roving cloth
- 2G: second chopped strand mat
- 2C: second glass cloth
- 3G: third chopped strand mat
- 3C: third glass cloth
- 4, 104: cover member
- 4b, 104b: tapered portion
- 5, 105: first sheet
- 6: sheet laminate
- 7: center rod
- 11, 111: packer
- 21: resin
- 22-24: first to third resin

## Claims

1. A method of attaching a cover member (4) including a first sheet (5) and a sheet laminate (6) to an inner wall of a circular pipe (16), wherein the first sheet (5) has a radius of curvature (R) or a flat shape, said radius of curvature (R) being larger than an inner diameter (R3) of the circular pipe (16), wherein the first sheet (5) further has elastic restoring force that restores the radius of curvature (R) or the flat shape, the method comprising:
winding and temporarily fixing the first sheet (5) around a cylindrical packer (11), wherein the cylindrical packer (11) has a radius that is smaller than the inner diameter (R3) of the circular pipe (16) and is radially expandable;
forming the sheet laminate (6) by adhering a plurality of sheets (1C, 1G, 1R, 2G, 2C, 3G, 3C) together with uncured first resin (22);
winding the sheet laminate (6) around the first sheet (5), which is wound around the packer (11), via uncured second resin (23) in order to form the cover member (4) and to temporarily fix the sheet laminate (6);
applying uncured third resin (24) on the cover member (4) that is wound around the packer (11), and inserting the packer (11) into the circular pipe (16);
pulling the packer (11) by means of a first wire (19) or a second wire (20) and positioning the packer (11) at a predetermined position of the circular pipe (16), wherein the first and second wires (19, 20) are attached to both axial ends of the packer (11), respectively;
radially expanding the packer (11) at the predetermined position of the circular pipe (16) in order to release temporary fixation of the first sheet (5) and the sheet laminate (6), and pressing the cover member (4) against the inner wall of the circular pipe (16) via the third resin (24), whereby when the packer is radially expanded and the temporary fixation is released, the cover member is pressed against the inner wall of the circular pipe due to the elastic restoring force of the first sheet;
pulling the packer (11) out of the circular pipe (16) by pulling the first or second wire (19 or 20); and
curing the first, second and third resins (22, 23, 24) in order to fix the cover member (4) to the inner wall of the circular pipe (16).

2. The method according to claim 1, wherein
the first sheet (5) is formed by curing resin (21) for shape memory, with which the sheet (5) is impregnated, while holding the sheet (5) in the radius of curvature (R).

3. The method according to claim 2, wherein
the sheet (5) is wound around a center rod (7) having the same radius as the radius of curvature (R); and a release film (30) is inserted between the sheet (5) and the center rod (7).

4. The method according to claim 2, wherein the sheet (5) is wound around a center rod (7) having the same radius as the radius of curvature (R); and the center rod (7) is formed of polyethylene.

5. The method according to any one of claims 1 to 4, wherein the plurality of sheets (1C, 1G, 1R, 2G, 2C, 3G, 3C) of the sheet laminate (6) are kept at a temperature that is lower than an ambient temperature after the sheets (1C, 1G, 1R, 2G, 2C, 3G, 3C) are stuck together by the first resin (22) and until they are wound around the first sheet (5).

6. The method according to any one of claims 1 to 5, wherein the sheets (1C, 1G, 1R, 2G, 2C, 3G, 3C) of the sheet laminate (6) are stuck together such that sides of the sheets (1C, 1G, 1R, 2G, 2C, 3G, 3C) that are parallel to an axial direction (P) of the circular pipe (16) are gradually shifted in a width direction (W) that is perpendicular to the axial direction (P).

7. The method according to any one of claims 1 to 6, wherein each sheet (1C, 1G, 1R, 2G, 2C, 3G, 3C) of the sheet laminate (6) overlaps in a circumferential direction when the sheet (1C, 1G, 1R, 2G, 2C, 3G, 3C) is fixed to the inner wall of the circular pipe (16).

8. The method according to any one of claims 1 to 7, wherein temporary fixation of the first sheet (5) and the sheet laminate (6) are achieved by winding tapes around outer surfaces of the first sheet (5) and the sheet laminate (6); and
the temporary fixation is released by radially expanding the packer (11) and thereby breaking the tapes.

9. The method according to any one of claims 1 to 8, wherein
the circular pipe (16) is connected to a first shaft (25) and a second shaft (26) at different positions thereof;
one end of the first wire (19) is attached to one end of the packer (11), and another end of the first wire (19) is guided through the first shaft (25) to outside of the first shaft (25);
one end of the second wire (20) is attached to another end of the packer (11), and another end of the second wire (20) is guided through the second shaft (26) to outside of the second shaft (26); and
the first and second wires (19, 20) are pulled from outside the first and second shafts (25, 26).

10. The method according to claim 9, wherein
a wire holder (18) that holds said one end of the first wire (19) is inserted into the circular pipe (16) through the first shaft (25);
the wire holder (18) is driven within the circular pipe (16) to a vicinity of a connection (28) between the circular pipe (16) and the second shaft (26);
said one end of the first wire (19) is detached from the wire holder (18); the packer (11) to which said one end of the second wire (20) is attached is arranged in the vicinity of the connection (28) through the second shaft (26); and
said one end of the first wire (19) is attached to said one end of the packer (11).

11. The method according to claim 10, wherein
the wire holder (18) has imaging means.

12. The method according to any one of claims 1 to 11, wherein the sheet laminate (6) includes a glass cloth (1G, 2G, 3G), a chopped strand mat (1C 2C, 3C) and a roving cloth (1R).

13. The method according to any one of claims 1 to 12, wherein
the first sheet (5) or the sheet laminate (6) includes a sensor or a strain gauge.

14. The method according to any one of claims 1 to 13, wherein
the first sheet (5) is formed of metal, ceramic or a composite material.

15. The method according to any one of claims 1 to 14, further comprising successively fixing a plurality of the cover member (104) to the inner wall of the circular pipe (16); wherein
each cover member (4, 104) has tapered parts (4b, 104b) whose thicknesses decrease toward both axial ends of the circular pipe (16); and
the cover member (104) installed later is installed such that the tapered part (104b) of the cover member (104) installed later overrides the tapered part (4b) of the cover member (4) previously installed.

16. The method according to claim 15, wherein
a plurality of the packers (11) are arranged in series in the circular pipe (16).

17. The method according to claim 15 or 16, wherein
the first sheet (105) of the cover member (104) that is installed second, or later, has:
a constant width part (105a) that has a constant width in a direction that is perpendicular to an axial direction (P) of the circular pipe (16) and that extends to one end of the sheet (105) in the axial direction (P); and
a part (105c) having a gradually increasing width, said part (105c) being located adjacent to the constant width part (104a), and a width of said part (105c) gradually increases toward another end of the sheet (105); and
the cover member (104) installed second, or later, is installed such that the tapered part (104b) on a side of the constant width part (104a) overrides the tapered part (4b) of the cover member (4) previously installed.

18. The method according to any one of claims 1 to 17, wherein
the circular pipe (16) is a circular pipe having a cylindrical inner wall, such as an open hole, a water pipe, a sewage pipe, a sea water pipe, a hot water pipe, a gas pipe, and a rock cavity.

19. The method according to claim 18, wherein
water, sewage, sea water, hot water or gas flows through the circular pipe (16) after the packer (11) is inserted into the circular pipe (16) and until the cover member (4) is fixed to the inner wall of the circular pipe (16).

## Patentansprüche

1. Verfahren zum Befestigen eines Abdeckelements (4), beinhaltend eine erste Schicht (5) und ein Schichtlaminat (6), an einer Innenwand einer kreisförmigen Leitung (16), wobei die erste Schicht einen Krümmungsradius (R) oder eine flache Form aufweist, wobei der Krümmungsradius (R) größer ist als ein Innendurchmesser (R3) der kreisförmigen Leitung (16), wobei die erste Schicht (5) weiterhin eine elastische Rückstellkraft aufweist, die den Krümmungsradius (R) oder die flache Form wiederherstellt, wobei das Verfahren umfasst:
Wickeln und vorübergehendes Fixieren der ersten Schicht (5) um einen zylindrischen Packer (11) herum, wobei der zylindrische Packer (11) einen Radius aufweist, der kleiner ist als der Innendurchmesser (R3) der kreisförmigen Leitung (16) und radial ausdehnbar ist;
Bilden des Schichtlaminats (6) durch Zusammenkleben einer Mehrzahl von Schichten (1C, 1G, 1R, 2G, 2C, 3G, 3C) mit ungehärtetem erstem Harz (22);
Wickeln des Schichtlaminats (6) um die erste Schicht (5) herum, welche um den Packer (11) gewickelt ist, über ungehärtetes zweites Harz (23), um das Abdeckelement (4) zu bilden und das Schichtlaminat (6) vorübergehend zu befestigen;
Aufbringen ungehärteten dritten Harzes (24) auf das Abdeckelement (4), das um den Packer (11) gewickelt ist, und Einsetzen des Packers (11) in die kreisförmige Leitung (16);
Ziehen des Packers (11) mittels eines ersten Drahtes (19) oder eines zweiten Drahtes (20) und Positionieren des Packers (11) an eine vorbestimmte Position der kreisförmigen Leitung (16), wobei der erste und der zweite Draht (19, 20) entsprechend an beiden axialen Enden des Packers (11) angebracht werden;
radiales Ausdehnen des Packers (11) an der vorbestimmten Position der kreisförmigen Leitung (16), um die vorübergehende Befestigung der ersten Schicht (5) und des Schichtlaminats (6) zu lösen und das Abdeckelement (4) gegen die Innenwand der kreisförmigen Leitung (16) über das dritte Harz (24) zu drücken, wobei wenn der Packer radial ausgedehnt wird und die vorübergehende Befestigung gelöst wird, wird das Abdeckelement gegen die Innenwand der kreisförmigen Leitung gedrückt aufgrund der elastischen Rückstellkraft der ersten Schicht;
Ziehen des Packers (11) aus der kreisförmigen Leitung (16) heraus durch Ziehen des ersten oder zweiten Drahtes (19 oder 20); und
Aushärten des ersten, zweiten und dritten Harzes (22, 23, 24), um das Abdeckelement (4) an der Innenwand der kreisförmigen Leitung (16) zu befestigen.

2. Verfahren gemäß Anspruch 1, wobei die erste Schicht (5) durch Aushärten von Harz (21) für Formgedächtnis gebildet wird, mit welchem die Schicht (5) imprägniert wird, während die Schicht (5) in dem Krümmungsradius (R) gehalten wird.

3. Verfahren gemäß Anspruch 2, wobei die Schicht (5) um einen Mittelstab (7) gewickelt wird, der denselben Radius aufweist wie der Krümmungsradius (R); und ein Trennfilm (30) zwischen die Schicht (5) und den Mittelstab eingefügt wird.

4. Verfahren gemäß Anspruch 2, wobei die Schicht (5) um einen Mittelstab (7) gewickelt wird, der denselben Radius aufweist wie der Krümmungsradius (R); und der Mittelstab (7) aus Polyethylen gebildet wird.

5. Verfahren gemäß einem der Ansprüche 1 bis 4, wobei die Mehrzahl der Schichten (1C, 1G, 1R, 2G, 2C, 3G, 3C) des Schichtlaminats (6) auf einer Temperatur gehalten wird, die niedriger ist als eine Umgebungstemperatur, nachdem die Schichten (1C, 1G, 1R, 2G, 2C, 3G, 3C) durch das erste Harz (22) zusammengeklebt werden und bis sie um die erste Schicht (5) gewickelt werden.

6. Verfahren gemäß einem der Ansprüche 1 bis 5, wobei die Schichten (1C, 1G, 1R, 2G, 2C, 3G, 3C) des Schichtlaminats (6) zusammengeklebt werden, sodass Seiten der Schichten (1C, 1G, 1R, 2G, 2C, 3G, 3C), die parallel zu einer Axialrichtung (P) der kreisförmigen Leitung (16) sind, allmählich in eine Breitenrichtung (W) verschoben werden, die senkrecht zu der Axialrichtung (P) ist.

7. Verfahren gemäß einem der Ansprüche 1 bis 6, wobei jede Schicht (1C, 1G, 1R, 2G, 2C, 3G, 3C) des Schichtlaminats (6) in einer Umfangsrichtung überlappt, wenn die Schicht (1C, 1G, 1R, 2G, 2C, 3G, 3C) an der Innenwand der kreisförmigen Leitung (16) befestigt wird.

8. Verfahren gemäß einem der Ansprüche 1 bis 7, wobei vorübergehende Befestigung der ersten Schicht (5) und des Schichtlaminats (6) erreicht werden durch Wickeln von Bändern um äußere Oberflächen der ersten Schicht (5) und des Schichtlaminats (6) herum; und
die vorübergehende Befestigung wird gelöst durch radiales Ausdehnen des Packers (11) und dadurch Brechen der Bänder.

9. Verfahren gemäß einem der Ansprüche 1 bis 8, wobei die kreisförmige Leitung (16) verbunden wird mit einer ersten Welle (25) und einer zweiten Welle (26) an verschiedenen Positionen davon;
ein Ende des ersten Drahtes (19) wird an einem Ende des Packers (11) angebracht, und ein anderes Ende des ersten Drahtes (19) wird durch die erste Welle (25) zur Außenseite der ersten Welle (25) geführt;
ein Ende des zweiten Drahtes (20) wird an einem anderen Ende des Packers (11) angebracht, und ein anderes Ende des zweiten Drahtes (20) wird durch die zweite Welle (26) zur Außenseite der zweiten Welle (26) geführt; und
der erste und zweite Draht (19, 20) werden von außerhalb der ersten und zweiten Welle (25, 26) gezogen.

10. Verfahren gemäß Anspruch 9, wobei ein Drahthalter (18), der das eine Ende des ersten Drahtes (19) hält, eingeführt wird in die kreisförmige Leitung (16) durch die erste Welle (25);
wobei der Drahthalter (18) angetrieben wird innerhalb der kreisförmigen Leitung (16) in eine Nähe einer Verbindung (28) zwischen der kreisförmigen Leitung (16) und der zweiten Welle (26);
wobei das eine Ende des ersten Drahtes (19) vom Drahthalter (18) abgetrennt wird;
wobei der Packer (11), an welchen das eine Ende des zweiten Drahtes (20) angebracht wird, angeordnet wird in der Nähe der Verbindung (28) durch die zweite Welle (26); und
wobei das eine Ende des ersten Drahtes (19) an dem einen Ende des Packers (11) angebracht wird.

11. Verfahren gemäß Anspruch 10, wobei der Drahthalter (18) Abbildungsmittel aufweist.

12. Verfahren gemäß einem der Ansprüche 1 bis 11, wobei das Schichtlaminat (6) beinhaltet ein Glasfasergewebe (1G, 2G, 3G), ein Glasfaservlies (1C, 2C, 3C) und ein Glasrovinggewebe (1R).

13. Verfahren gemäß einem der Ansprüche 1 bis 12, wobei die erste Schicht (5) oder das Schichtlaminat (6) einen Sensor oder einen Dehnmessstreifen beinhaltet.

14. Verfahren gemäß einem der Ansprüche 1 bis 13, wobei die erste Schicht (5) aus Metall, Keramik oder einem Verbundmaterial gebildet ist.

15. Verfahren gemäß einem der Ansprüche 1 bis 14, weiterhin umfassend sukzessives Befestigen einer Mehrzahl der Abdeckelemente (104) an der Innenwand der kreisförmigen Leitung (16); wobei
jedes Abdeckelement (4, 104) abgeschrägte Teile (4b, 104b) aufweist, deren Dicke zu beiden axialen Enden der kreisförmigen Leitung (16) hin abnimmt; und
wobei das später installierte Abdeckelement (104) so installiert wird, dass der abgeschrägte Teil (104b) des später installierten Abdeckelements (104) den abgeschrägten Teil (4b) des zuvor installierten Abdeckelements (4) überschreibt.

16. Verfahren gemäß Anspruch 15, wobei eine Mehrzahl der Packer (11) in Reihe in der kreisförmigen Leitung (16) angeordnet sind.

17. Verfahren gemäß Anspruch 15 oder 16, wobei die erste Schicht (105) des Abdeckelements (104), die als zweites oder später installiert wird, aufweist:
einen Teil mit konstanter Breite (105a), der eine konstante Breite aufweist in einer Richtung, die senkrecht ist zu einer Axialrichtung (P) der kreisförmigen Leitung (16), und die sich in der Axialrichtung (P) zu einem Ende der Schicht (105) erstreckt; und
einen Teil (105c), der eine allmählich zunehmenden Breite aufweist, wobei das Teil (105c), das benachbart zu dem Teil mit konstanter Breite (104a) angebracht wird, und eine Breite des Teils (105c) allmählich zu einem anderen Ende von der Schicht (105) zunimmt; und
das Abdeckelement (104), das als zweites oder später installiert wird, so installiert wird, dass der abgeschrägte Teil (104b) auf einer Seite des Teils mit konstanter Breite (104a), den abgeschrägten Teil (4b) des zuvor installierten Abdeckelements (4), überschreibt.

18. Verfahren gemäß einem der Ansprüche 1 bis 17, wobei die kreisförmige Leitung (16) eine kreisförmige Leitung ist, die eine zylindrische Innenwand aufweist, wie z.B. ein offenes Loch, eine Wasserleitung, eine Abwasserleitung, eine Meerwasserleitung, eine Heißwasserleitung, eine Gasleitung und ein Felshohlraum.

19. Verfahren gemäß Anspruch 18, wobei Wasser, Abwasser, Meerwasser, Heißwasser oder Gas durch die kreisförmige Leitung (16) strömen, nachdem der Packer (11) in die kreisförmige Leitung (16) eingeführt wurde und bis das Abdeckelement (4) an der Innenwand der kreisförmigen Leitung (16) befestigt wird.

## Revendications

1. Un procédé de fixation d'un élément de recouvrement (4) comprenant une première feuille (5) et un stratifié en feuille (6) à une paroi intérieure d'un tube circulaire (16), dans lequel la première feuille (5) a un rayon de courbure (R) ou une forme plane, ledit rayon de courbure (R) étant supérieur à un diamètre intérieur (R3) du tube circulaire (16), la première feuille (5) ayant en outre une force de restauration élastique qui restaure le rayon de courbure (R) ou la forme plane, le procédé comprenant
le fait d'enrouler et de fixer de façon temporaire la première feuille (5) autour d'un conditionneur cylindrique (11), le conditionneur cylindrique (11) ayant un rayon qui est inférieur au diamètre intérieur (R3) du tube circulaire (16) et étant apte à se dilater radialement ;
le fait de former le stratifié en feuille (6) en faisant adhérer entre elles une pluralité de feuilles (1C, 1G, 1R, 2G, 2C, 3G, 3C) au moyen d'une première résine non durcie (22) ;
le fait d'enrouler la stratifié en feuille (6) autour de la première feuille (5), qui est enroulée autour du conditionneur (11), au moyen d'une deuxième résine (23) non durcie afin de former l'élément de recouvrement (4) et de fixer temporairement le stratifié en feuille (6) ;
le fait d'appliquer une troisième résine (24) non durcie sur l'élément de recouvrement (4) qui est enroulé autour du conditionneur (11), et d'insérer le conditionneur (11) dans le tube circulaire (16) ;
le fait de tirer le conditionneur (11) au moyen d'un premier câble (19) ou d'un deuxième câble (20) et de positionner le conditionneur (11) en une position prédéterminée du tube circulaire (16), les premier et deuxième câbles (19, 20) étant fixés respectivement aux deux extrémités axiales du conditionneur (11) ;
le fait de réaliser l'expansion radiale du conditionneur (11) dans la position prédéterminée du tube circulaire (16) afin de libérer la fixation temporaire de la première feuille (5) et du stratifié en feuille (6), et de presser l'élément de recouvrement (4) contre la paroi intérieure du tube circulaire (16) par l'intermédiaire de la troisième résine (24), de sorte que lorsque le conditionneur est dilaté radialement et que la fixation temporaire est libérée, l'élément de recouvrement soit pressé contre la paroi intérieure du tube circulaire u ait de la force élastique de restauration de la première feuille ;
le fait de retirer le conditionneur (11) hors du tube circulaire (16) en tirant le premier ou le deuxième câbles (19 ou 20) ; et
le fait de réaliser le durcissement des première, deuxième et troisième résines (22, 23, 24) pour fixer l'élément de recouvrement (4) à la paroi intérieure du tube circulaire (16).

2. Le procédé selon la revendication 1, dans lequel
la première feuille (5) est formée en faisant durcir une résine (21) pour une mémoire de forme, dont la feuille (5) est imprégnée, tout en maintenant la feuille (5) dans le rayon de courbure (R).

3. Le procédé selon la revendication 2, dans lequel
la feuille (5) est enroulée autour d'une tige centrale (7) ayant le même rayon que le rayon de courbure (R) ; et
un film de séparation (30) est inséré entre la feuille (5) et la tige centrale (7).

4. Le procédé selon la revendication 2, dans lequel
la feuille (5) est enroulée autour d'une tige centrale (7) ayant le même rayon que le rayon de courbure (7) ; et
la tige centrale (7) est formée de polyéthylène.

5. Le procédé selon l'une quelconque des revendications 1 à 4, dans lequel
les feuilles (1C, 1G, 1R, 2G, 2C, 3G, 3C) de la pluralité de feuilles du stratifié en feuille (6) sont maintenues à une température qui est inférieure à une température ambiante après que les feuilles (1C, 1G, 1R, 2G, 2C, 3G, 3C) soient collées les unes aux autres par la première résine (22), et jusqu'à ce qu'elles soient enroulées autour de la première feuille (5).

6. Le procédé selon l'une quelconque des revendications 1 à 5, dans lequel
les feuilles (1C, 1G, 1R, 2G, 2C, 3G, 3C) du stratifié en feuille (6) sont collées les unes aux autres de telle sorte que des côtés des feuilles (1C, 1G, 1R, 2G, 2C, 3G, 3C) qui sont parallèles à une direction axiale (P) du tube circulaire (16) soient progressivement décalés dans une direction en largeur (W) qui est perpendiculaire à la direction axiale (P).

7. Le procédé selon l'une quelconque des revendications 1 à 6, dans lequel
chaque feuille (1C, 1G, 1R, 2G, 2C, 3G, 3C) du stratifié en feuille (6) se chevauche dans une direction circonférentielle lorsque la feuille (1C, 1G, 1R, 2G, 2C, 3G, 3C) est fixée sur la paroi interne du tube circulaire (16).

8. Le procédé selon l'une quelconque des revendications 1 à 7, dans lequel
une fixation temporaire de la première feuille (5) et du stratifié en feuille (6) est obtenue en enroulant des bandes autour de surfaces extérieures de la première feuille (5) et du stratifié en feuille (6) ; et
la fixation temporaire est libérée en opérant une dilatation radiale du conditionneur (11), et en opérant ainsi une rupture des bandes.

9. Le procédé selon l'une quelconque des revendications 1 à 8, dans lequel
le tube circulaire (16) est relié à un premier arbre (25) et à un deuxième arbre (26) en différentes positions de ceux-ci ;
une extrémité du premier câble (19) est fixée à une extrémité du conditionneur (11) et une autre extrémité du premier câble (19) est guidée à travers le premier arbre (25) vers l'extérieur du premier arbre (25) ;
une extrémité du deuxième câble (20) est fixée à une autre extrémité du conditionneur (11), et une autre extrémité du deuxième câble (20) est guidée à travers le deuxième arbre (26) vers l'extérieur du deuxième arbre (26) ; et
les premier et deuxième câbles (19, 20) sont tirés depuis l'extérieur des premier et deuxième arbres (25, 26).

10. Le procédé selon la revendication 9, dans lequel
un support de câble (18) qui maintient ladite une extrémité du premier câble (19) est inséré dans le tube circulaire (16) par le premier arbre (25) :
le support de câble (18) est entraîné à l'intérieur du tube circulaire (16) jusqu'à proximité d'une connexion (28) entre le tube circulaire (16) et le deuxième arbre (26) ;
ladite une extrémité du premier câble (19) est détachée du support de câble (18) ;
le conditionneur (11) auquel ladite une extrémité du deuxième câble (20) est fixée est disposé à proximité de la connexion (28) à travers le deuxième arbre (26) ; et
ladite une extrémité du premier câble (19) est fixée à ladite une extrémité du conditionneur (11).

11. Le procédé selon la revendication 10, dans lequel
le support de câble (18) comporte des moyens d'imagerie.

12. Le procédé selon l'une quelconque des revendications 1 à 11, dans lequel la feuille stratifiée (6) comprend un tissu de verre (1G, 2G, 3G), un mat de brins hachés (1C, 2C, 3C) et un tissu roving (1R).

13. Le procédé selon l'une quelconque des revendications 1 à 12, dans lequel
la première feuille (5) ou la stratifié en feuille (6) comprend un capteur ou une jauge de contrainte.

14. Le procédé selon l'une quelconque des revendications 1 à 13, dans lequel
la première feuille (5) est formée de métal, de céramique ou d'un matériau composite.

15. Le procédé selon l'une quelconque des revendications 1 à 14, comprenant en outre le fait de fixer de façon successive une pluralité de l'élément de recouvrement (104) à la paroi interne du tube circulaire (16) ;
chaque élément de recouvrement (4, 104) comportant des parties coniques (4b, 104b) dont l'épaisseur diminue vers les deux extrémités axiales du tube circulaire (16) ; et
l'élément de recouvrement (104) installé ultérieurement est installé de telle sorte que la partie conique (104b) de l'élément de recouvrement (104) installé ultérieurement s'étend au-dessus de la partie conique (4b) de l'élément de recouvrement (4) précédemment installé.

16. Le procédé selon la revendication 15, dans lequel
les conditionneurs d'une pluralité de conditionneurs (11) sont agencés en série dans le tube circulaire (16).

17. Le procédé selon la revendication 15 ou la revendication 16, dans lequel
la première feuille (105) de l'élément de recouvrement (104) qui est installée en deuxième lieu, ou plus tard, présente :
une partie (105a) de largeur constante qui a une largeur constante dans une direction qui est perpendiculaire à une direction axiale (P) du tube circulaire (16) et qui s'étend à une extrémité de la feuille (105) dans la direction axiale (P) ; et
une partie (105c) ayant une largeur augmentant progressivement, ladite partie (105c) étant située de façon adjacente à la partie de largeur constante (104a), et une largeur de ladite partie (105c) augmentant progressivement vers une autre extrémité de la feuille (105) ; et
l'élément de recouvrement (104) installé en deuxième lieu, ou plus tard, est installé de telle sorte que la partie conique (104b) sur un côté de la partie de largeur constante (104a) s'étend au-dessus de la partie conique (4b) de l'élément de recouvrement (4) précédemment installé.

18. Le procédé selon l'une quelconque des revendications 1 à 17, dans lequel
le tube circulaire (16) est un tube circulaire ayant une paroi intérieure cylindrique, tel qu'un trou ouvert, un tuyau d'eau, un tuyau d'égout, un tuyau d'eau de mer, un tuyau d'eau chaude, un tuyau de gaz et une cavité de roche.

19. Le procédé selon la revendication 18, dans lequel
de l'eau, des eaux usées, de l'eau de mer, de l'eau chaude ou du gaz s'écoule à travers le tube circulaire (16) après que le conditionneur (11) est inséré dans le tube circulaire (16) et jusqu'à ce que l'élément de recouvrement (4) soit fixé sur la paroi interne du tube circulaire (16).
